# EUROPEAN PATENT APPLICATION

(11) **EP 1 826 734 A1**
(43) Date of publication of application: **29.08.2007**
(21) Application number: 07075078.1
(22) Date of filing: 31.01.2007
(51) Int. Cl.: G08B 25/01, G08B 1/08

(54) **System and method for hazardous event detection and automatic emergency communication**

(30) Priority: 22.02.2006 US 359703
(71) Applicant: Delphi Technologies, Inc., Troy, Michigan 48007 (US)
(72) Inventor: Deyoe, Scott A., Greentown, IN 46936 (US)
(74) Representative: Denton, Michael John

(57) **Abstract**

A system and method is provided to automatically detect and respond to a hazardous event. The present invention is especially useful to a person that is incapable of announcing an emergency, or otherwise unable to locate or reach a wireless communication device (200) such as a cellular telephone and dial 911. In an aspect, a wireless communication device (200) employing an event detection algorithm (222) detects a predetermined acoustic signature such as metal deformation or glass breaking, a predetermined mechanical signature or other input such as a threshold temperature signifying a hazardous event, and automatically initiates and communicates for assistance. Geographic Position information of the communication device and therefore the hazardous event can additionally be provided via a position determination device (236) or a GPS (238). The present invention can be used as a two-way communication in a speakerphone mode, and can be readily transported with a person, operating independently from a motor vehicle (100).

## Description

### TECHNICAL FIELD

The invention relates generally to automatic detection and response to a hazardous event, and more particularly to utilizing a wireless communication device to detect a predetermined acoustic signature, mechanical signature or threshold temperature, provide position information and communicate for assistance.

### BACKGROUND OF THE INVENTION

Cellular telephones are now widely used and habitually transported with a person on outings. Besides being utilized for personal and business communications, the cellular telephone may be used for emergency communications by dialing 911, should the need arise. In response to a cellular emergency call, the United States Federal Communications Commission (FCC) has required that wireless telephone users receive the same enhanced 911 (E911) service that is available to landline callers. Most 911 calls from landline telephones today automatically provide the 911 call centers, or a Public Safety Answering Point (PSAP), with the address or location of the telephone from which the call is placed. By contrast, PSAPs do not today receive that same information on 911 calls from wireless telephones. The FCC wireless Enhanced E911 rules seek to improve the effectiveness and reliability of wireless 911 service by providing 911 dispatchers with location information that will enable them to dispatch assistance to wireless 911 callers much more quickly. The Wireless E911 mandate was divided into two phases. Phase I required wireless service carriers to transmit the wireless telephone numbers and the addresses of the cell towers closest to the 911 callers. Phase II required wireless service carriers to be more specific and transmit the latitude and longitude of the telephones, within 50 to 300 meters in most cases.

The deployment of E911 has proved complex and has taken time to implement, requiring the development of new technologies and upgrades to local 911 PSAPs, as well as coordination among public safety agencies, wireless carriers, technology vendors, equipment manufacturers, and local wireline carriers. Position determination of wireless telephones is accomplished using messages defined by standard IS-801 for position determination within cellular systems. The IS-801 standard defines messaging traffic through the cellular network in which a cellular telephone position is transmitted.

In an example scenario, a cellular telephone user reports a motor vehicle accident using the cellular telephone. However, the cellular telephone user may have been injured in the accident and may be unconscious or otherwise incapable of locating or reaching the cellular telephone, dialing 911 and announcing an emergency. Thus, if the cellular telephone user is unable to place a call after an accident or during an emergency event, emergency services may be delayed until a passerby notifies the PSAP of the emergency situation and location. Emergency systems are available that are integrated and embedded with a vehicle system, but the vehicle and therefore the system may become damaged during a hazardous event. Further, a PSAP may be unequipped to handle or may reject an automated telephone call such as a machine telephoning 911 and delivering a recorded message to report an emergency.

### SUMMARY OF THE INVENTION

A system and method is provided to automatically detect and respond to a hazardous event. The present invention provides assistance in an emergency and is especially useful to a person that is incapable of announcing an emergency, or otherwise unable to locate or reach a cellular telephone and dial 911.

A wireless communication device detects a predetermined acoustic signature, mechanical signature or other input such as heat, and automatically communicates for assistance. Position information of the communication device and therefore the hazardous event can additionally be provided. In an embodiment, the communication is a two-way communication including a cellular telephone user and an assistance provider where the cellular telephone sets to a speakerphone mode in response to the automatic communication being initiated. Standard wireless communication device elements incorporating embodiments of the present invention may be used to detect an accident or other unforeseen event and initiate an automatic call to a Public Safety Answering Point (PSAP). Further, the present invention can operate independently from a motor vehicle, and can also be transported with a person to monitor other hazardous events besides motor vehicle collisions.

Features of the invention are achieved in part by utilizing one of a variety of wireless communications devices including a cellular telephone, wideband (broadband) personal communications services (PCS), and a geographic area specialized mobile radio (SMR). A reception device such as a standard cellular telephone microphone receives acoustic events and mechanical events. A processor monitors the acoustic and mechanical events from the reception device, detects a predetermined acoustic and mechanical signature signifying a hazardous event, and automatically initiates a communication in response to detecting the predetermined acoustic and mechanical signature. In an embodiment, a hazardous event detection algorithm is employed by the processor for detecting the predetermined acoustic and mechanical signature. The predetermined acoustic signature and mechanical signatures can include a signature of metal deformation, plastic shattering, glass breaking, acoustic overpressure, mechanical shock, and deployment of a vehicle air bag. In an embodiment, a vibration sensor for detecting a mechanical shock and a temperature sensor for detecting a predetermined threshold temperature is further formed as part of the wireless communications device. A communication device, including a transmitter and a receiver carries out the communication initiated by the processor.

A position determination device formed as part of the cellular telephone provides a geographic position of the cellular telephone. The position determination device can employ messages defined by various network protocols including IS-801, J-STD-36, GSM, UMTS, and W-CDMA. In another embodiment, a global positioning system (GPS) is formed as part of the cellular telephone for providing a geographic position of the cellular telephone.

Other features and advantages of this invention will be apparent to a person of skill in the art who studies the invention disclosure. Therefore, the scope of the invention will be better understood by reference to an example of an embodiment, given with respect to the following figures.

### BRIEF DESCRIPTION OF THE DRAWINGS

The foregoing aspects and many of the attendant advantages of this invention will become more readily appreciated by reference to the following detailed description, when taken in conjunction with the accompanying drawings, wherein:
FIG. 1 is an illustration depicting the usefulness in a hazardous event of a wireless communication device that detects and automatically responds to a predetermined input, in accordance with an embodiment of the present invention;
FIG. 2 is a schematic view of a wireless communication device that detects a predetermined acoustic signature, mechanical signature or other input, and automatically communicates for assistance, providing position information, incorporating an embodiment of the present invention; and
FIG. 3 is a logic diagram illustration showing the automatic detection and communication methods of the wireless communication device as in FIG. 2, in accordance with an embodiment of the present invention.

### DESCRIPTION OF THE PREFERRED EMBODIMENTS

Exemplary embodiments are described with reference to specific configurations. Those of ordinary skill in the art will appreciate that various changes and modifications can be made while remaining within the scope of the appended claims. Additionally, well-known elements, devices, components, methods, process steps and the like may not be set forth in detail in order to avoid obscuring the invention. Further, unless indicated to the contrary, any numerical values set forth in the following specification and claims are approximations that may vary depending upon the desired characteristics sought to be obtained by the present invention.

A system and method is described herein for providing automatic detection and response to a hazardous event. A wireless communication device detects a predetermined acoustic signature, mechanical signature or other input such as heat, and automatically communicates for assistance, providing position information.

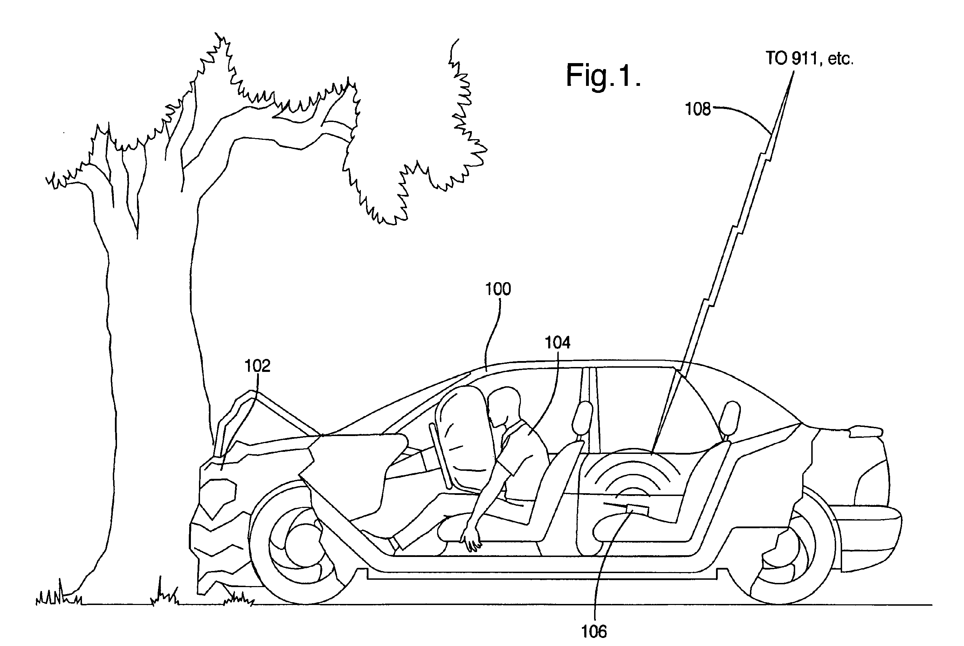

Referring to the drawings wherein identical reference numerals denote the same elements throughout the various views, **FIG. 1** illustrates the usefulness in a hazardous event of a wireless communication device incorporating embodiments of the present invention. It is to be appreciated that the present invention can be utilized with a variety of wireless communications devices including a cellular telephone, wideband (broadband) personal communications services (PCS), and a geographic area specialized mobile radio (SMR).

Here, the wireless communication device is a cellular telephone 106 situated in a motor vehicle 100 that collided with a tree, as shown by vehicle damage 102. The present invention operates independently from a proximate or surrounding vehicle 100. For example, the present invention operates independently from a motor vehicle in which it may be placed, or operates independently without direct coupling to a supplemental inflatable restraint (SIR) system that is part of a motor vehicle. In an embodiment, the present invention operates without any alteration of the SIR system. The independent operation of the present invention is desirable since a vehicle system or a communication system that is part of a vehicle may become damaged or fail during a crash.

Cellular telephone 106 provides assistance in an emergency and is especially useful to a person 104 that is incapable of announcing an emergency, or otherwise unable to locate or reach cellular telephone 106 and dial 911. Cellular telephone 106 detects and automatically initiates a communication 108 in response to a predetermined input as discussed infra. In an embodiment, the communication is a two-way communication including a cellular telephone user and an assistance provider where the cellular telephone sets to a speakerphone mode in response to the automatic communication 108 being initiated. After connection of the call, the PSAP may monitor the situation while the cellular telephone 106 remains in a speakerphone setting. The assistance provider can dispatch the appropriate assistance including an ambulance, fire truck, tow truck and so on.

The present invention may be utilized with various network protocols for position determination such as IS-801, J-STD-36, GSM, UMTS, W-CDMA, and so on. In an embodiment, IS-801 is an air-interface protocol for position determination in IS-95 and IS-2000. J-STD-36 covers ANSI-41 network protocol and IS-801 air-interface protocol and is described in a document TIA/EIA J-STD-036-A, entitled "Wireless Enhanced Emergency Services, Phase II." Position determination for GSM and W-CDMA is described in a document GSM 04.31, entitled "Digital Cellular Telecommunications System (Phase 2+); Location Services (LCS); Mobile Station (MS)--Serving Mobile Location Centre (SMLC) Radio Resource LCS Protocol (RRLP)." These documents are publicly available.

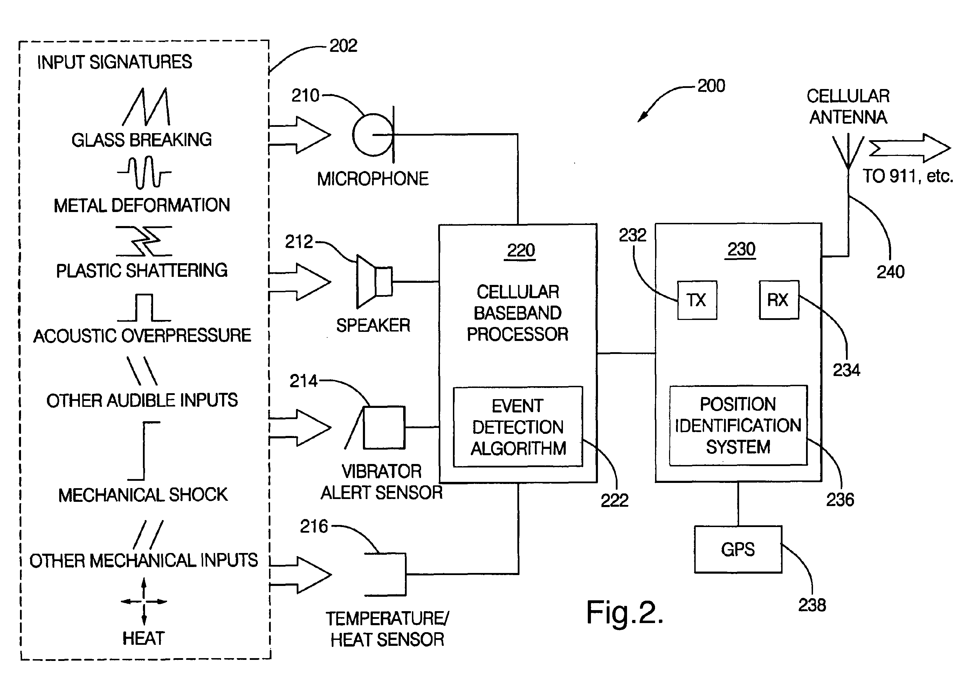

As illustrated in **FIG. 2**, wireless communication device 200 detects a predetermined input signature 202, and automatically communicates for assistance, providing position information. In an embodiment, standard wireless communication device elements incorporating embodiments of the present invention may be utilized to detect a predetermined event and initiate an automatic call to a Public Safety Answering Point (PSAP).

A reception device such as microphone 210 incorporated with a cellular telephone receives input signatures 202 including acoustic events and mechanical events. In an embodiment, additional reception devices are formed as part of the wireless communications device 200 to receive input signatures 202 including a vibrator alert or vibration sensor 214, which detects a mechanical shock event, and a temperature sensor 216, which detects temperature. Cellular baseband processor 220 monitors the acoustic events, mechanical events and other inputs such as temperature from the reception device, and detects a predetermined acoustic signature, mechanical signature and threshold temperature signifying a hazardous event. The predetermined acoustic signatures include a characteristic impulse noise of metal deformation, plastic shattering and glass breaking or shattering. The predetermined mechanical signatures include acoustic overpressure, mechanical shock, a vibration pattern, and an acceleration or deceleration pattern consistent with a crash. Other detectible events include vehicle air bag deployment and threshold temperature. In an embodiment, the cellular telephone is positioned to optimally receive any event inputs. In an example, the cellular telephone is situated within a holding device attached to the motor vehicle dashboard. In response to detecting a predetermined acoustic signature, mechanical signature or threshold temperature, cellular baseband processor 220 automatically initiates a communication. A communication device 230, including a transmitter 232 and a receiver 234 and antenna 240 carries out the communication initiated by the processor 220.

In an embodiment, a hazardous event detection algorithm 222 is employed by processor 220 for detecting a predetermined acoustic signature, mechanical signature or other input signatures 202 such as heat signifying a hazardous event. Event detection algorithm 222 initiates a communication via processor 220 in response to detecting a single predetermined signature signifying a hazardous event. Alternatively, event detection algorithm 222 analyzes two or more predetermined signatures collectively and determines a confidence percentage that a hazardous event has occurred. As a result of a predetermined confidence percentage being found, processor 220 automatically initiates a communication to an assistance provider.

A position determination device 236 formed as part of the wireless communication device 200 provides a geographic position of the wireless communication device 200. The position determination device can employ messages defined by various network protocols including IS-801, J-STD-36, GSM, UMTS, and W-CDMA, and so on. In an embodiment, the signals sent and received by wireless communication device 200 include two channels, namely a control channel and a communications channel. The control channel handles coordination with a network. The communications channel is used primarily for voice and data, and is also used to transmit and receive control messages with the network. Position Determining Equipment (PDE) utilizes the information provided by the control channel from the position determination device 236, calculates the wireless communication device 200 position and matches up the wireless communication device 200 position to the communication transmitted to the PSAP. In another embodiment, a global positioning system (GPS) is formed as part of the wireless communication device 200 to provide a geographic position of the wireless communication device 200.

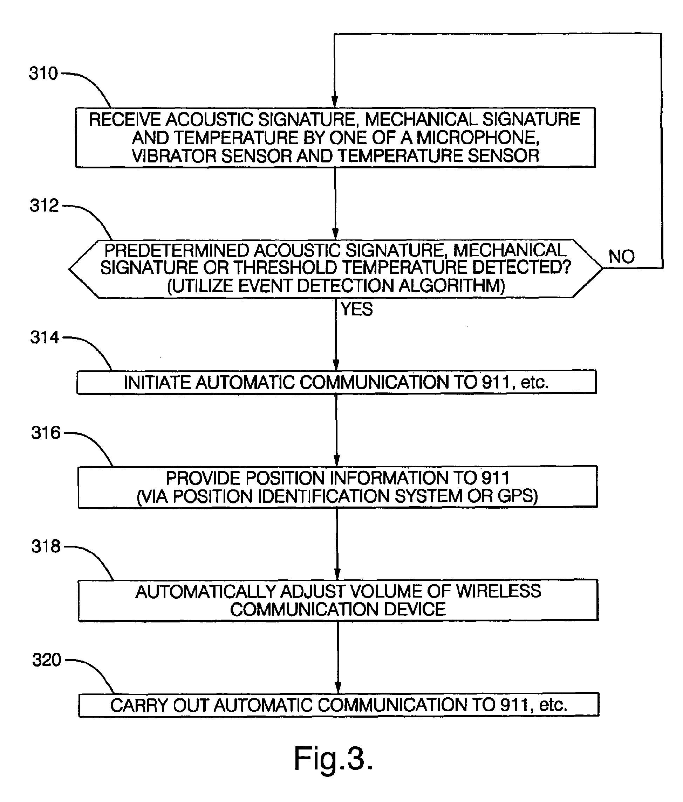

Referring to **FIG. 3**, a logic diagram illustration shows the automatic detection and communication methods of the wireless communication device as in FIG. 2, in accordance with an embodiment of the present invention. Logic box 310 represents the method of receiving one of an acoustic event, mechanical event and a temperature by a reception device such as microphone 210, vibrator sensor 214 or temperature sensor 216. Decision box 312 represents the method of detection of at least one of a predetermined acoustic signature, mechanical signature and threshold temperature by processor 220. In an embodiment, event detection algorithm 222 determines whether at least one of a predetermined acoustic signature, mechanical signature and a threshold temperature signifying a hazardous event is detected.

If a predetermined acoustic signature, mechanical signature and threshold temperature are not detected, decision box is negative and the method returns to logic box 310. If at least one of a predetermined acoustic signature, mechanical signature and threshold temperature are detected, decision box 312 is affirmative and the method advances to logic box 314. Logic box 314 represents the method of automatically initiating a communication to emergency 911 and other assistance. When communication with the emergency assistance is established, logic box 316 represents the method of providing position information to the emergency assistance. Position information can be provided by at least one of position identification system 236 or GPS 238. Also, when communication with the emergency assistance is established, logic box 318 represents the method of automatically adjusting speaker volume of the wireless communication device to facilitate a two-way communication. Additionally, logic box 320 represents the method of carrying out the automatic communication with the emergency assistance to facilitate providing aid to any person involved in a hazardous event.

Other features and advantages of this invention will be apparent to a person of skill in the art who studies this disclosure. For example, it is to be appreciated that the wireless communication device of the present invention can be useful for a wide range of potentially harmful events including a gunshot and bomb explosion. Thus, exemplary embodiments, modifications and variations may be made to the disclosed embodiments while remaining within the spirit and scope of the invention as defined by the appended claims.

## Claims

1. A hazardous event safety system comprising:
a reception device (210) for receiving at least one of an acoustic event and a mechanical event;
a processor (220) for monitoring the at least one of acoustic event and mechanical event from the reception device (210), detecting at least one of a predetermined acoustic and mechanical signature signifying a hazardous event, and automatically initiating a communication in response to detecting the one of predetermined acoustic and mechanical signature; and
a communication device (230) for carrying out the communication initiated by the processor (220), wherein the communication device (230) includes a transmitter (232) and a receiver (234) for wireless communication with an assistance provider;
wherein the reception device (210), the processor (220) and the communication device (230) are formed as part of a wireless communication device (200), the wireless communication device (200) being at least one of a cellular telephone, a wideband personal communications service (PCS), and a geographic area specialized mobile radio (SMR).

2. The hazardous event safety system as in claim 1, wherein the predetermined acoustic signature and mechanical signature includes a signature of at least one of metal deformation, plastic shattering, glass breaking, acoustic overpressure, mechanical shock, and deployment of a vehicle air bag.

3. The hazardous event safety system as in claim 1, further comprising a vibration sensor (214) formed as part of the cellular telephone for detecting a mechanical shock.

4. The hazardous event safety system as in claim 1, further comprising a temperature sensor (216) formed as part of the cellular telephone for detecting a predetermined threshold temperature.

5. The hazardous event safety system as in claim 1, wherein the communication is a two-way communication including a cellular telephone user and the assistance provider.

6. The hazardous event safety system as in claim 5, wherein the cellular telephone automatically sets to a speakerphone mode in response to the automatic communication being initiated, wherein a speaker volume is automatically adjusted.

7. The hazardous event safety system as in claim 1, further comprising a hazardous event detection algorithm (222) employed by the processor (220) for detecting the predetermined acoustic and mechanical signature.

8. The hazardous event safety system as in claim 1, further comprising a position determination device (236) formed as part of the cellular telephone for providing a geographic position of the cellular telephone.

9. The hazardous event safety system as in claim 8, wherein the position determination device (236) employs messages defined by at least one of standard IS-801, J-STD-36, GSM, UMTS, and W-CDMA.

10. The hazardous event safety system as in claim 1, further comprising a global positioning system (GPS) (238) formed as part of the cellular telephone for providing a geographic position of the cellular telephone.

11. The hazardous event safety system as in claim 1, wherein the automatically initiated communication is transmitted to a Public Safety Answering Point (PSAP) via telephone number 911.

12. A cellular telephone for automatic detection and response to a hazardous event comprising:
a reception device (210) for receiving at least one of an acoustic event and a mechanical event;
a processor (220) for monitoring the at least one of acoustic event and mechanical event from the reception device (210), detecting at least one of a predetermined acoustic and mechanical signature signifying a hazardous event, and automatically initiating a communication in response to detecting the one of predetermined acoustic and mechanical signature, wherein the predetermined acoustic signature and mechanical signature includes a signature of at least one of metal deformation, plastic shattering, glass breaking, acoustic overpressure, mechanical shock, and deployment of a vehicle air bag; and
a transmitter (232) and a receiver (234) for carrying out the communication with an assistance provider, initiated by the processor (220).

13. The cellular telephone as in claim 12, further comprising at least one of a vibration sensor (214) for detecting a mechanical shock, and a temperature sensor (216) for detecting a predetermined threshold temperature.

14. The cellular telephone as in claim 12, further comprising a hazardous event detection algorithm (222) employed by the processor (220) for detecting the predetermined acoustic and mechanical signature.

15. The cellular telephone as in claim 12, wherein the automatically initiated communication is transmitted to a Public Safety Answering Point (PSAP) via telephone number 911, wherein the communication is a two-way communication, and wherein the cellular telephone automatically sets to a speakerphone mode in response to the automatic communication being initiated, wherein a speaker volume is automatically adjusted.

16. The cellular telephone as in claim 12, further comprising at least one of a position determination device (236) and a global positioning system (GPS) (238) for providing a geographic position of the cellular telephone, and wherein the position determination device (236) employs messages defined by at least one of standard IS-801, J-STD-36, GSM, UMTS, and W-CDMA.

17. A method for automatic detection and response to a hazardous event comprising:
receiving at least one of an acoustic event and a mechanical event utilizing a reception device (210);
monitoring the at least one of the acoustic event and mechanical event from the reception device (210) utilizing a processor (220);
detecting at least one of a predetermined acoustic and mechanical signature signifying a hazardous event;
automatically initiating a communication in response to detecting the one of the predetermined acoustic and mechanical signature, wherein the predetermined acoustic signature and mechanical signature includes a signature of at least one of metal deformation, plastic shattering, glass breaking, acoustic overpressure, mechanical shock, and deployment of a vehicle air bag; and
carrying out the communication with an assistance provider initiated by the processor (220) utilizing a transmitter (232) and a receiver (234);
wherein the reception device (210), the processor (220), the transmitter (232) and the receiver (234) are formed as part of a wireless communication device, the wireless communication device being at least one of a cellular telephone, a wideband personal communications service (PCS), and a geographic area specialized mobile radio (SMR).

18. The method as in claim 17, further comprising at least one of detecting a mechanical shock utilizing a vibration sensor (214), detecting a predetermined threshold temperature utilizing a temperature sensor (216), and providing a geographic position of the wireless communication device (200) utilizing at least one of a position determination device (236) and a global positioning system (GPS) (238), wherein the position determination device (236) employs messages defined by at least one of standard IS-801, J-STD-36, GSM, UMTS, and W-CDMA.

19. The method as in claim 17, further comprising detecting the predetermined acoustic and mechanical signature utilizing a hazardous event detection algorithm (222) employed by the processor (220).

20. The method as in claim 17, wherein the automatically initiated communication is transmitted to a Public Safety Answering Point (PSAP) via telephone number 911, wherein the communication is a two-way communication, and wherein the wireless communication device (200) automatically sets to a speakerphone mode in response to the automatic communication being initiated, wherein a speaker volume is automatically adjusted.
